# EUROPÄISCHE PATENTSCHRIFT

(11) **EP 2 084 033 B1**
(45) Veröffentlichungstag und Bekanntmachung des Hinweises auf die Patenterteilung: **27.07.2016**
(21) Anmeldenummer: 07819410.7
(22) Anmeldetag: 29.10.2007
(51) Int. Cl.: B60N 2/68

(54) **STRUKTURELEMENT FÜR FAHRZEUGSITZ**
STRUCTURAL ELEMENT FOR A VEHICLE SEAT
ÉLÉMENT STRUCTUREL POUR SIÈGE DE VÉHICULE

(30) Priorität: 27.10.2006 DE 102006051377; 04.04.2007 DE 102007016690
(43) Veröffentlichungstag der Anmeldung: 05.08.2009
(73) Patentinhaber: Johnson Controls GmbH, 51399 Burscheid (DE)
(72) Erfinder: GROSS, Bernd, 40764 Langenfeld (DE); DANNHEISIG, Andreas, 48336 Sassenberg (DE); EHRENSTEIN, Philipp, 50670 Köln (DE); STEPANKOWSKI, Marian, 70184 Stuttgart (DE)
(74) Vertreter: Wolff, Felix
(86) Internationale Anmeldenummer: PCT/EP2007/009368
(87) Internationale Veröffentlichungsnummer: WO 2008/049639

(56) Entgegenhaltungen:
- EP-A- 0 372 338
- EP-A- 0 749 867
- DE-A1-102004 039 366
- DE-U1-202006 001 868
- FR-A- 2 824 800

## Beschreibung

Die Erfindung betrifft ein Verfahren zur Herstellung eines Strukturelementes eines Kraftfahrzeugsitzes.

Die Mehrzahl aller heute in Serie befindlichen Kraftfahrzeugsitze weisen Strukturelemente mit einer Konstruktion unter Verwendung von Stahl mit verschiedensten Profilen und Blechen auf. Es sind jedoch auch Kraftfahrzeugsitze mit Strukturelementen in Leichtbauweise bekannt, die aus unterschiedlichen Materialien bestehen. Derartige Strukturelemente werden beispielsweise in der DE 10 2004 044 734, der DE 697 02 023 T2 sowie der DE 198 26 732 A1 offenbart. Diese Strukturelemente werden derzeit jedoch anders und in einer geringeren Stückzahl gefertigt als Strukturelemente aus Stahl und sind dadurch teurer in der Herstellung.

Aus der FR 2 824 800 A1 oder der DE 20 2006 001 868 U1 sind z.B. Verfahren zur Herstellung eines Strukturelementes eines Kraftfahrzeugsitzes, bei dem mehrere Bauteile durch Schweißen miteinander verbunden werden, bekannt. Es war deshalb die Aufgabe der vorliegenden Ereindung ein Verfahren zur Verfügung zu stellen, mit dem mehrere Ausführungsformen eines Strukturelementes eines Kraftfahrzeugsitzes kostengünstig zur Verfügung gestellt werden können.

Gelöst wird die Ausgabe mit einem Verfahren nach Anspruch 1.

Kraftfahrzeugsitze weisen meist ein Strukturelement auf, das sich aus mehreren Bauteilen zusammensetzt, die zumindest teilweise miteinander verbunden sind. Zumindest eines dieser Bauteile kann in mehreren Ausführungsformen, beispielsweise einer konventionellen Stahlbauweise oder einer Leichtbauweise, zur Verfügung stehen. Dieses Bauteil kann aber auch für unterschiedliche Verbindungsarten unterschiedlich ausgebildet sein. Beispielsweise kann dies Bauteil eine etwas andere Ausgestaltung haben je nach dem, ob es mit dem anderen Bauteil verklebt oder verschweißt wird.

Mit dem vorliegenden Verfahren soll erreicht werden, dass bestimmte Bauteile beispielsweise in einer Stahlkonstruktion durch Bauteile in Leichtbauweise ersetzt werden können, ohne dass die Anschlussbauteile verändert werden müssen. Dabei ist vorgesehen, dass ein Bauteil, je nach Verbindungsart mit dem anderen Bauteil, unterschiedlich ausgestaltet ist. Dadurch wird es möglich, mit ein und demselben Konstruktionsdesign auf einer Fahrzeugplattform verschiedene Ausführungsformen zu realisieren. Es kann somit sowohl eine "Low Cost Variante" bestehend aus Stahl als auch aus eine "High End Variante" bestehend aus einer Hybridbauweise zur Verfügung gestellt werden. Außerdem können unterschiedliche Verbindungsvarianten zum Einsatz kommen. Bei der Hybridvariante werden vorzugsweise Stahlbauteile mit Bauteilen, die nicht aus Stahl gefertigt sind, beispielsweise Leichtbauwerkstoff, wie beispielsweise Kunststoff, Aluminium und/oder einer Aluminiumlegierung oder deren Kombination verwendet. Dabei wird das Hybriddesign immer deutlich leichter sein als die konventionelle Stahllösung. Ein weiterer großer Vorteil des erfindungsgemäßen Verfahrens liegt darin, dass zur Herstellung der Strukturen nahezu die gleiche Produktionsausrüstung hinsichtlich Schweißroboter/-anlagen und Vorrichtungen verwendet werden können. Dadurch könnten die Produktionskosten und die damit verbundenen Investitionen insbesondere für die Herstellung des Kraftfahrzeugsitzes in Hybridbauweise ebenfalls deutlich gesenkt werden.

Vorzugsweise ist das Strukturelement ein Lehnenrahmen, der die Grundstruktur für eine Rückenlehne eines Kraftfahrzeugsitzes darstellt. An dem Lehnenrahmen wird in der Regel ein Recliner zur Verstellung der Neigung der Rückenlehne, die Befederung des Kraftfahrzeugsitzes, die Kopfstütze und gegebenenfalls Airbags angeordnet. Der Lehnenrahmen weist vorzugsweise Lehnenseitenteile auf, die durch eine untere Quertraverse und/oder eine obere Quertraverse miteinander verbunden sind. Die Lehenseitenteile sind vorzugsweise dreidimensional geformte Bauteile aus einem beliebigen Werkstoff, beispielsweise Stahlblech, einem Leichtbauwerkstoff, wie Aluminium oder Kunststoff oder einer Kombination aus diesen Werkstoffen, und bleiben besonders bevorzugt unverändert, unabhängig von der Ausführungsform der Quertraversen und/oder der Verbindung der Quertraverse mit dem Seitenteil der Rückenlehne. Besonders bevorzugt ist die untere und/oder obere Quertraverse in Stahl oder als eine Leichtbauausführungsform ausgeführt. In beiden Fällen sind die Quertraversen vorzugsweise als Profile und/oder Pressteile ausgestaltet. Bei der Ausführung in Leichtbauweise handelt es sich vorzugsweise um ein extrudierbares Profil, besonders bevorzugt um ein Profil, das einen Leichtbauwerkstoff, vorzugsweise Aluminium, aufweist oder um ein Pressteil insbesondere aus einem Leichtbauwerkstoff, beispielsweise Aluminium.

Vorzugsweise sind mindestens eine Quertraverse und die Lehnenseitenteile jeweils in einem Verbindungsbereich miteinander verbunden. Bei dieser Verbindung in dem Verbindungsbereich kann es sich um eine form-, kraft- und/oder stoffschlüssige Verbindung handeln. Der Form- und/oder Kraftschluss erfolgt beispielweise durch Nieten, Tulpen, Durchsetzfügen (Toxen) oder Bördeln. Der Stoffschluß erfolgt vorzugsweise durch Schweißen, insbesondere Laserschweißen, Laserhybridschweißen, Laserbracing oder Kleben. Besonders bevorzugt werden die Teile durch Cold Metal Transfer CMT-Schweißen miteinander verbunden.

In einer anderen bevorzugten Ausführungsform ist das Strukturelement der Unterbau, der Sitzrahmen, eines Fahrzeugsitzes. Dieser Unterbau stellt die Grundkonstruktion für den Sitzteil des Fahrzeugsitzes, auf dem der Fahrzeuginsasse sitzt, dar. Vorzugsweise weist der Unterbau zwei Unterbauseitenteile aufweist. Diese Unterbauseitenteile sind vorzugsweise dreidimensional geformte Bauteile, die besonders bevorzugt aus Stahlblech oder einem Leichtbauwerkstoff, wie Aluminium und/oder Kunststoff, geformt sind. Diese Unterbauseitenteile sind vorzugsweise durch mindestens ein Bauteil miteinander verbunden. Vorzugsweise ist dieses Bauteil, beispielsweise ein Querrohr, in Stahl oder als eine

Leichtbauausführungsform ausgeführt. In Leichtbauweise besteht das Bauteil bevorzugt zumindest teilweise aus einem Leichtbaumaterial, beispielsweise aus Aluminium.

Vorzugsweise sind die Unterbauseitenteile und das Bauteil jeweils in einem Verbindungsbereich miteinander verbunden.

Vorzugsweise ist die Verbindung in dem Verbindungsbereich form-, kraft- und/oder stoffschlüssig. Der Kraftschluss erfolgt beispielweise durch Nieten, Tulpen, Durchsetzfügen (Toxen), Crimpen oder Bördeln. Der Stoffschluß erfolgt vorzugsweise durch, Schweißen, insbesondere Laserschweißen, Laserhybridschweißen, Laserbracing oder Kleben. Besonders bevorzugt werden die Teile durch Cold Metal Transfer CMT-Schweißen miteinander verbunden

Vorzugsweise bleibt der Verbindungsbereich unabhängig von der Ausführungsform der zu verbindenden Bauteile und/oder der Verbindungsart unverändert. Besonders bevorzugt bleibt insbesondere der an den Lehnenseitenteilen und/oder an den Unterbauseitenteilen angeordnete Verbindungsbereich unverändert. Dadurch können immer dieselben Seitenteile verwendet werden unabhängig davon, ob die sie verbindenden Bauteile in Stahl oder aus einem Leichtbaumaterial ausgeführt sind und/oder unabhängig von der Art der Verbindung. Dadurch ergeben sich erheblich Lagerhaltungs- und Produktionsvorteile.

Vorzugsweise weisen die Quertraversen und/oder das Bauteil in Leichtbauweise einen größeren Querschnitt auf als in der Stahlausführung. Bei der Gestaltung des Verbindungsbereichs muss dem Rechnung getragen werden. Er muss so konstruiert sein, dass genug Raum für das Bauteil mit dem größten Querschnitt vorhanden ist. Für die Verbindung von zwei Teilen, die beide aus Stahl oder einem Leichtbauwerkstoff, beispielsweise Aluminium, gefertigt sind, muss dann gegebenenfalls ein Adapter vorgesehen werden, um eine geeignete Verbindung zu erzielen. Alternativ kann ein Stahlteil im Verbindungsbereich aufgeweitet werden, beispielsweise durch Hydroforming.

Vorzugsweise weist das Lehenseitenteil einen Verbindungsbereich auf. Besonders bevorzugt bleibt dieser Verbindungsbereich unabhängig von der Verbindungsart mit der Quertraverse unverändert; d.h. das Lehnenteil kann mit der Quertraverse beispielsweise verschweißt oder verklebt werden, ohne dass das Lehenteil verändert werden muss.

Besonders bevorzugt wird der Verbindungsbereich des Lehenteils für eine Klebeverbindung dimensioniert. Da der Verbindungsbereich für eine Klebeverbindung etwas größer ist als für eine Schweißverbindung, kann dann in diesem Verbindungsbereich eine Quertraverse durch Kleben und durch Schweißen angeordnet werden, ohne dass das Lehnenteil verändert werden muss.

Vorzugsweise weist die Quertraverse einen Verbindungsbereich auf, der je nach Verbindungsart unterschiedlich gestaltet ist. Besonders bevorzugt werden alle Quertraversen zunächst für eine Klebeverbindung passend gefertigt. Dadurch reduziert sich die Lagerhaltung. Soll die Quertraverse dann durch Schweißen mit dem Seitenteil verbunden werden, wird die Quertraverse, insbesondere spanabhebend oder durch Stanzen nachbearbeitet. Beim Nachbearbeiten wird insbesondere die Kontaktfläche der Quertraverse vermindert und dabei die für eine Schweißverbindung vorhandene Kontur an der Quertraverse vergrößert.

Gemäß dem Gegenstand der vorliegenden Erfindung wird ein Verbindungsbereich der Bauteile vor dem Schweißen von einem Klebeteil in ein Schweißteil umgewandelt werden. Dies erfolgt insbesondere durch Entfernung von Teilen der Klebefläche, insbesondere so, dass sich die Kontur, entlang derer geschweißt werden kann, erhöht.

Im Folgenden wird die Erfindung anhand eines Beispiels für einen Vordersitz und der Figuren 1 bis 12 erläutert. Diese Erläuterungen sind lediglich beispielhaft und schränken den allgemeinen Erfindungsgedanken nicht ein.
- Figur 1: zeigt einen Rückenlehnenrahmen.
- Figur 2: zeigt den Unterbau eines Kraftfahrzeugsitzes.
- Figur 3: zeigt eine weitere Ausführung des Lehnenrahmens.
- Figur 4: zeigt die obere Traverse in zwei Ansichten.
- Figur 5: zeigt die untere Traverse in zwei Ansichten.
- Figur 6: zeigt die obere Traverse passend für eine Klebeverbindung.
- Figur 7: zeigt eine Klebeverbindung zwischen dem Lehnenseitenteil und der unteren Traverse.
- Figur 8: zeigt die untere Traverse als Klebe- und als Schweißteil.
- Figur 9: zeigt die obere Traverse als Klebe- und als Schweißteil.
- Figur 10: zeigt die obere Traverse, die als Schweißteil und als Klebeteil einsetzbar ist.
- Figur 11: zeigt die untere Traverse, die als Schweißteil und als Klebeteil einsetzbar ist.
- Figur 12: zeigt die Verbindung der Quertraverse mit dem Sitzseitenteil.

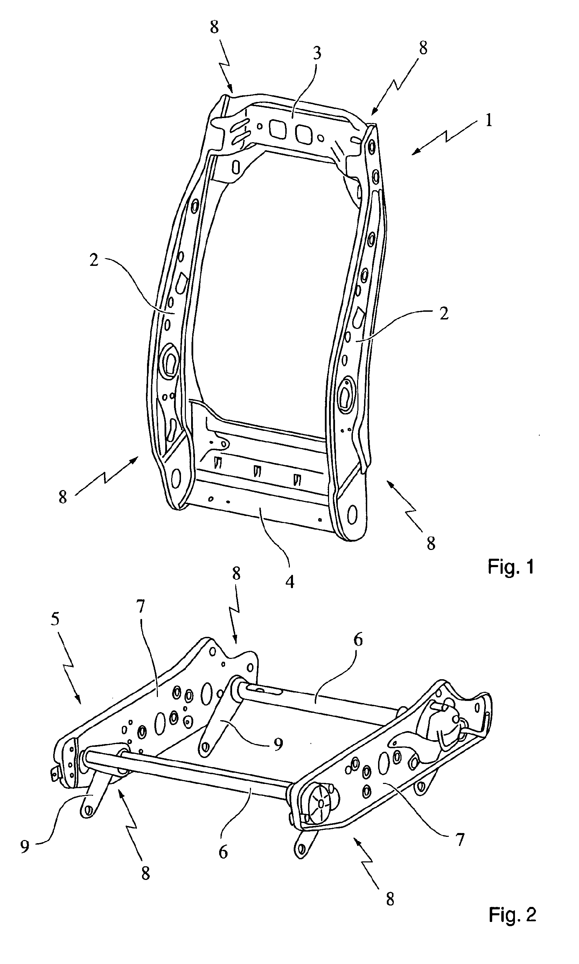

Das erste Ausführungsbeispiel (Fig. 1) zeigt einen Lehnenrahmen 1, bestehend aus zwei Lehnenseitenteilen 2 aus hochfestem Stahl, einer oberen Quertraverse 3 sowie einer unteren Quertraverse 4, beide hergestellt aus Aluminium. Die obere und untere Quertraverse 3, 4 werden mittels eines CMT-Schweißverfahrens (Cold Metall Transfer) oder anderen Verbindungstechniken wie Kleben, mit den verzinkten (notwendig für CMT) oder blanken hochfesten Lehnenseitenteilen 2 verbunden. Dieses Schweißverfahren erlaubt es, die Aluminiumteile mit den verzinkten Stahlbauteilen zu verbinden. Die Schnittstellen, an denen die Quertraversen 3, 4 mit den Lehnenseitenteilen 2 verbunden sind, sind konstruktiv modular derart gestaltet, dass sie den wahlweisen Einbau von gewöhnlich in der Blechdicke dickeren Quertraversen 3, 4 aus Aluminium oder aber den Quertraversen 3, 4 bestehend aus Stahl (geringere Materialstärke bei identischem Design) erlauben, ohne dass die Lehnenseitenteile 2 angepasst werden müssten. Das bedeutet, dass mit identischen Lehnenseitenteilen 2 zwei Varianten eines Lehnenrahmens 1 angeboten werden können, und zwar die konventionelle Ausführung aus Stahl / Stahl wie auch die Hybridbauweise Stahl / Aluminium. Auch das Verbindungsverfahren kann für alle Konfigurationen gleichermaßen eingesetzt werden.

Weitere mögliche Anwendungen können im Unterbau 5 (Sitzteil mit 2-, 4-, ≥6-Wegeverstellung) erfolgen (Fig. 2). Die Querrohre 6 aus Aluminium weisen einen größeren Querschnitt auf als die Querrohre 6 aus Stahl auf, um sich im Crashfall ähnlich zu verhalten. Die Unterbauseitenteile 7 bestehen weiterhin aus Stahl oder aus einem Leichtbauwerkstoff, beispielsweise Aluminium.

Die Querrohre werden in Bohrungen in den Unterbauseitenteilen gesteckt und dort verankert. Um zu gewährleisten, dass Querrohre mit unterschiedlichen Durchmessern verwendet werden können, ist die Bohrung nach dem Querschnitt des größten Querrohrs, dem Querrohr aus Aluminium bemessen. Bei der Verwendung von Stahlrohren mit einem kleineren Querschnitt kann dann mit Adapterhülsen gearbeitet werden. Das Stahlrohr kann im Verbindungsbereich auch aufgeweitet werden. Die Schwingen 9 sind aus Leichtmetall gefertigt.

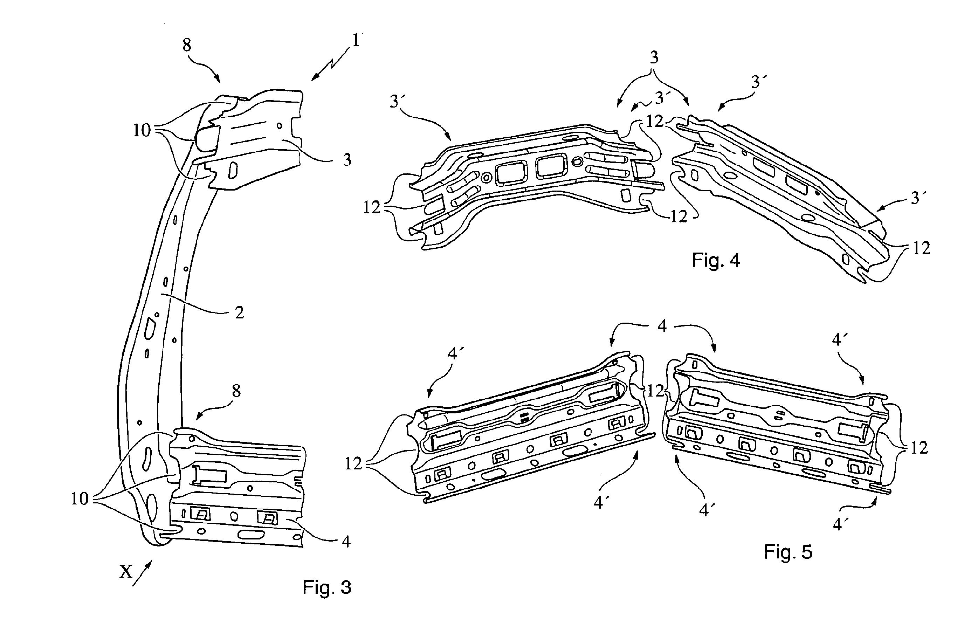

Figur 3 zeigt eine weitere Ausführungsform des Lehnenrahmens 1. In dem vorliegenden Fall sind die obere Quertraverse 3 sowie die untere Quertraverse 4 durch Schweißen, insbesondere CMT-Schweißen (Cold -Metall-Schweißen), miteinander verbunden. Die obere und die untere Quertraverse werden dabei, wie durch den Pfeil gekennzeichnet, in x-Richtung in das Seitenteil eingelegt und dort vorzugsweise mit jeweils drei Schweißnahten verschweißt. Dieselbe Vorgehensweise erfolgt auch beim Kleben oder jeglicher sonstiger verbindender Bearbeitung des Seitenteils mit den Quertraversen. Dadurch wird vermieden, dass der Lehnenrahmen während der Bearbeitung bewegt werden muss, was den Bearbeitungsaufwand erheblich reduziert.

Die Figuren 4 und 5 zeigen die obere Quertraverse 3 bzw. die untere Quertraverse 4 jeweils in zwei Ansichten. Deutlich ist zu erkennen, dass sowohl die obere Quertraverse 3 in ihrem Verbindungsbereich 3' als auch die untere Quertraverse 4 in ihrem Verbindungsbereich 4' Konturen 12 aufweist, entlang derer die Verschweißung erfolgt. Diese Konturen 12 werden insbesondere durch Ausstanzen erzeugt. Durch diese Ausstanzung verlängert sich die Kontur und damit die Länge der Schweißnaht, die entlang der Kontur 12 gelegt wird, was die Stabilität der Verbindung mit der Seitenlehne erhöht.

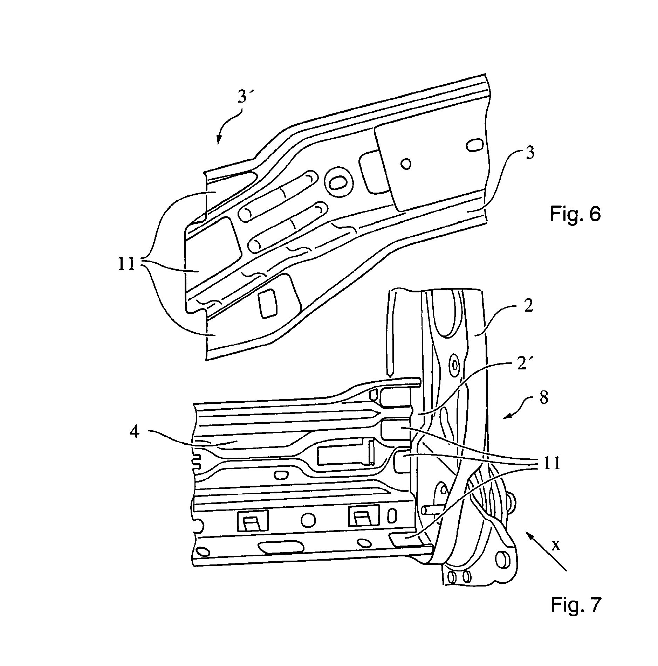

Figur 6 zeigt die obere Quertraverse 3, die in diesem Fall so gestaltet ist, dass sie im Verbindungsbereich 8 mit dem Lehnenseitenteil 2 verklebt werden kann. Dafür weist die Quertraverse 3 vorzugsweise drei Klebeflächen auf, wobei die untere Klebefläche besonders bevorzugt in einem rechten Winkel zu den beiden oberen Klebeflächen angeordnet ist, so dass das Bauteil in allen Richtungen vollständig an dem Lehnenseitenteil fixiert ist. Vorzugsweise wird diese Klebung besonders bevorzugt durch eine Tox-Verbindung (nicht dargestellt), d.h. eine Verbindung die mit Durchsetzfügen erzielt wird, kombiniert. Diese Form- und/oder

Kraftschussverbindung dient insbesondere der Fixierung der Teile bis zum vollständigen Aushärten der Klebeverbindung. Aber auch danach erhöht diese Form- und/oder Kraftschussverbindung die Belastbarkeit des Lehnenrahmens.

Figur 7 zeigt die untere Quertraverse 4, die an das Lehnenseitenteil mittels der Klebeverbindungsstellen 11 geklebt ist. Auch diese Verbindung ist durch Tox-Verbindung (nicht dargestellt) ergänzt. Der Verbindungsbereich 2' des Seitenteils 2, d.h. der Bereich an dem die Quertraverse 4 an dem Seitenteil 2 anliegt, ist für eine Klebeverbindung dimensioniert. Da die für eine Klebeverbindung benötigte Verbindungsfläche in der Regel größer ist als für eine Schweißverbindung, ist dieser Bereich 2' jedoch gleichermaßen für eine Schweißverbindung geeignet. Dies gilt für den Verbindungsbereich 2', in dem die obere Quertraverse an dem Seitenteil 2 angeordnet wird, gleichermaßen.

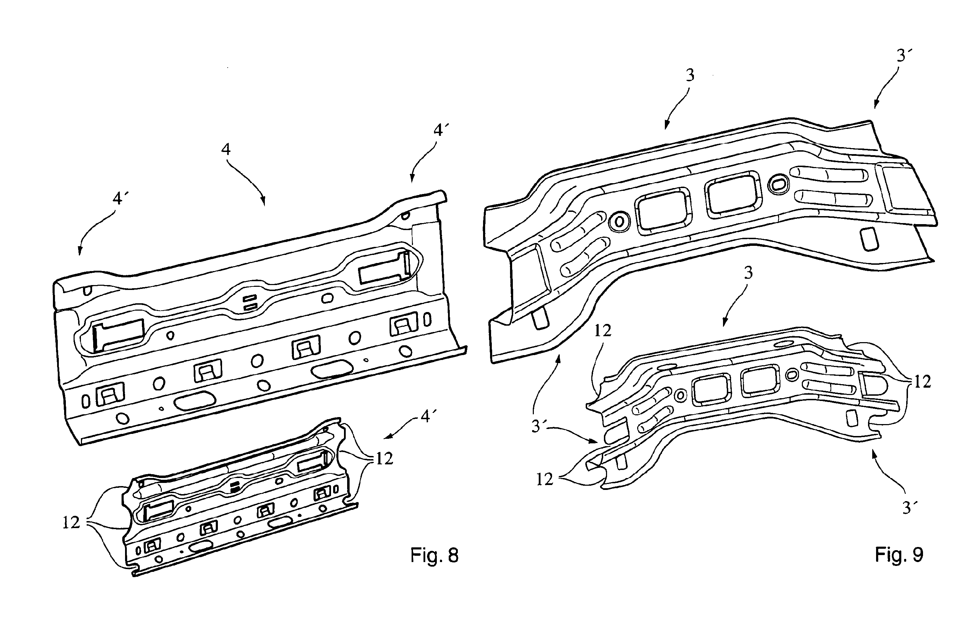

Figur 8 zeigt die untere Quertraverse 4. Die obere Darstellung zeigt die Quertraverse, die für eine Klebeverbindung insbesondere geeignet ist. Die untere Darstellung zeigt die Traverse, die insbesondere für eine Schweißverbindung geeignet ist. Die beiden Traversen unterscheiden sich lediglich durch die Schweißkontur 12. Zunächst werden alle Teile für eine Klebeverbindung passend hergestellt. Soll dann eine Quertraverse an das Lehnenseitenteil geschweißt werden, werden nachträglich Teile so aus dem Randbereich der Quertraverse ausgestanzt oder spannabhebend entfernt, dass sich die Schweißkontur 12 ergibt.

Figur 9 zeigt denselben Zusammenhang wie Figur 8, jedoch für die obere Quertraverse 3.

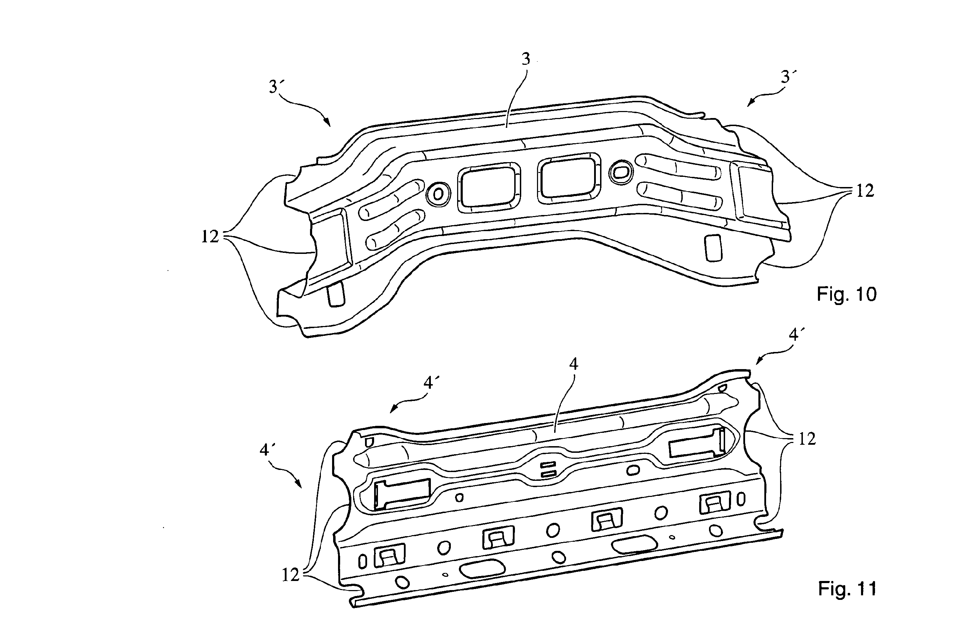

Figuren 10 und 11 zeigen die obere und untere Quertraverse, die für eine Schweißverbindung geeignet sind. In diesem Fall sind die Traversen 3, 4 so gestaltet, dass sie ohne Veränderung mit dem Seitenteil 2 verbunden werden können, unabhängig davon, ob die die Verbindung durch Schweißen oder durch Kleben erfolgt. Ein Vergleich mit den Traversen 3, 4 in den Figuren 8 und 9 verdeutlicht, dass die Bereiche, die aus dem Randbereich entfernt worden sind kleiner sind als bei einer Quertraverse, die nur zum Schweißen geeignet ist (vgl. Figuren 8, 9 untere Darstellung). Dadurch bleibt die zum Kleben vorhandene Fläche vergleichsweise groß. Die fürs Schweißen vorhandene Schweißkontur 12 ist nicht so lang wie bei der Schweißquertravers gemäß den Figuren 8, 9 (untere Darstellung) jedoch länger als bei einer geraden Kontur.

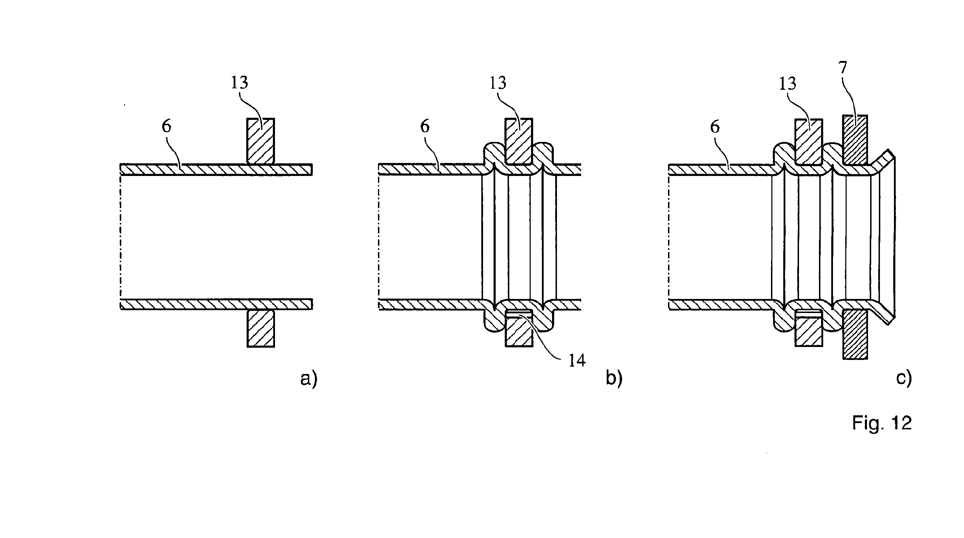

Figur 12 zeigt schematisch die Verbindung zwischen einem Querrohr 6 und dem Unterbauseitenteil 7. Zunächst wird ein Bauteil 13, das ein Teil eines Höhenverstellers (nicht dargestellt) ist und/oder mit einem Höhenversteller in Verbindung steht, über das Querrohr 6 geführt (Figur 12 a) und so dann mit dem Rohr durch Krimpen verbunden. Da das Teil 13 an seiner Innenseite Formschlussmittel 14 aufweist, ergibt sich dadurch eine axilialfixierte Verbindung, mit der auch Drehmomente übertragen werden können. Sodann erfolgt die Verbindung des Rohrs mit dem Sitzseitenteil 7 durch kegelförmiges Aufweiten des Randbereichs des Rohres 6. Diese Verbindung ist so gestaltet, dass sich das Rohr 6 in dem Seitenteil 7 drehen kann.

### Bezugszeichenliste:

- 1: Lehnenrahmen
- 2: Lehnenseitenteil
- 2': Verbindungsbereich am Seitenteil
- 3: Quertraverse (oben)
- 3': Verbindungsbereich der Quertraverse
- 4: Quertraverse (unten)
- 4': Verbindungsbereich der Quertraverse
- 5: Unterbau
- 6: Quertraverse, Querrohr, Bauteil
- 7: Unterbauseitenteil, Sitzseitenteil
- 8: Verbindungsbereich
- 9: Schwingen
- 10: Schweißverbindung
- 11: Klebeverbindungsstellen, form- und/oder kraftschlüssige Verbindungsstellen
- 12: Kontur entlang der geschweißt wird
- 13: Verbindungsmittel zum Höhenversteller
- 14: Formschlussmittel

## Patentansprüche

1. Verfahren zur Herstellung eines Strukturelementes eines Kraftfahrzeugsitzes, bei dem mehrere Bauteile (2 - 4, 6, 7) durch Schweißen miteinander verbunden werden,
**dadurch gekennzeichnet, dass**
ein Verbindungsbereich (3', 4') der Bauteile (3, 4) vor dem Schweißen von einem Klebeteil in ein Schweißteil umgewandelt wird, wobei Teile einer Klebefläche entfernt werden, so dass sich eine Kontur, entlang derer geschweißt werden kann, erhöht.

2. Verfahren nach Anspruch 1, **dadurch gekennzeichnet, dass** das Strukturelement ein Lehnenrahmen (1) ist, welcher Lehnenseitenteile (2) aufweist, die durch eine untere Quertraverse (4) und/oder eine obere Quertraverse (3) miteinander verbunden sind, wobei die Quertraverse (3, 4) zur Vergrößerung der Kontur, insbesondere spanabhebend oder durch Stanzen, nachbearbeitet wird.

## Claims

1. Method for producing a structural element of a motor vehicle seat, in which method a plurality of components (2-4, 6, 7) are connected to one another by way of welding, **characterized in that** a connecting region (3', 4') of the components (3, 4) is converted before the welding from an adhesive part into a welding part, parts of an adhesive surface being removed, with the result that a contour is raised, along which welding can be carried out.

2. Method according to Claim 1, **characterized in that** the structural element is a backrest frame (1) which has backrest side parts (2) which are connected to one another by way of a lower crossmember (4) and/or an upper crossmember (3), the crossmember (3, 4) being reworked, in particular with the removal of material or by way of punching, in order to enlarge the contour.

## Revendications

1. Procédé de fabrication d'un élément structurel d'un siège de véhicule automobile, dans lequel plusieurs composants (2 - 4, 6, 7) sont assemblés les uns aux autres par soudage,
**caractérisé en ce**
**qu'**une région d'assemblage (3', 4') des composants (3, 4) est convertie avant le soudage d'une pièce collée en une pièce soudée, des parties d'une surface collée étant enlevées de telle sorte qu'un contour le long duquel le soudage peut être effectué soit rehaussé.

2. Procédé selon la revendication 1, **caractérisé en ce que** l'élément structurel est un cadre de dossier (1) qui présente des parties latérales de dossier (2) qui sont assemblées les unes aux autres par une traverse inférieure (4) et/ou une traverse supérieure (3), la traverse (3, 4) étant post-usinée pour augmenter le contour, en particulier par enlèvement de copeaux ou par estampage.
